Europäisches Patentamt

European Patent Office

Office européen des brevets

(11) Publication number: **0 239 112**

**A2**

## (12) EUROPEAN PATENT APPLICATION

(21) Application number: 87104501.9

(51) Int. Cl.⁴: **G11B 7/24**

(22) Date of filing: 26.03.87

(30) Priority: 26.03.86 JP 69073/86

(43) Date of publication of application:
30.09.87 Bulletin 87/40

(84) Designated Contracting States:
**DE GB**

(71) Applicant: **FUJI PHOTO FILM CO., LTD.**
**210 Nakanuma Minami Ashigara-shi**
**Kanagawa 250-01(JP)**

(72) Inventor: **Kanamori, Katsuyuki**
**c/o Fuji Photo Film Co., Ltd. No. 200,**
**Oonakazato**
**Fujinomiya-shi Shizuoka(JP)**
Inventor: **Ohara, Shinichiro**
**c/o Fuji Photo Film Co., Ltd. No. 200,**
**Oonakazato**
**Fujinomiya-shi Shizuoka(JP)**

(74) Representative: **Patentanwälte Grünecker,**
**Kinkeldey, Stockmair & Partner**
**Maximilianstrasse 58**
**D-8000 München 22(DE)**

(54) **Recording medium.**

(57) A recording medium comprising a recording layer for writing and/or reading information with laser beam which is provided on a substrate, in which said recording layer contains a metal oxide in the form of discontinuous spots on the side facing the substrate.

# FIG. I

## RECORDING MEDIUM

## BACKGROUND OF THE INVENTION

### Filed of the invention

This invention relates to a recording medium, and more particularly to a recording medium for writing and/or reading information by means of laser beam of high energy density.

### Description of prior art

Information recording media utilizing a beam of high energy density such as laser beam have been developed in recent years and are noe put to practical use. Such recording medium is generally called "optical disc", and the practical applications thereof have been found, for example, as video disc and audio disc as well as disc memory for larger capacity computer and large-capacity static image file.

The optical disc generally comprises a disc-shaped transparent substrate of a plastic or glass material and a recording layer composed of a metal or semi-metal such as Bi, Sn, In or Te which is provided on the substrate. Further, a subbing layer or an intermediate layer made of a polymer material is generally provided between the substrate and the recording layer for improving the smoothness of the surface of the substrate, or enhancing the adhesion between the substrate and the recording layer and the sensitivity of the optical disc.

Writing of information on the optical disc can be conducted, for example, by irradiating the optical disc with a laser beam. Under irradiation with the laser beam, the irradiated area of the recording layer of the optical disc absorbs the energy of beam and a rise in temperature locally occurs and as a result, a chemical and physical change is caused to alter optical characteristics of the recording layer in the irradiated area, whereby the recording of information can be made. Reading of information from the optical disc is also conducted by irradiating the optical disc with laser beam. The information can be reproduced by detecting reflected light or transmitted light corresponding to the alteration in the optical characteristics of the recording layer.

As a disc structure for protecting the recording layer, there has been recently proposed an air-sandwich structure in which a recording layer is provided on at least one of two disc-shaped substrates and positioned inside the two substrates opposed to each other at a distance by interposing a ring-shaped inner spacer and a ring-shaped outer spacer between the two substrates so as to form a closed space surrounded by the two substrates and two spacers. In the optical disc having such structure, the recording layer is not directly exposed to outer air and the recording and reproduction of information are conducted by means of a with laser beam passing through the transparent substrate. Accordingly, there is little possibility that the recording layer is physically or chemically damaged or the surface is covered with dust which is to interfere with the recording and reproduction of information of the recording medium.

The recording media are very valuable in practical use in various fields as described hereinbefore, and the the sensitivity thereof in the recording procedure (i.e., recording sensitivity) is desired to be as high as possible. Also desired for the recording media is that the recorded information is read out with high precision.

For enhancing the recording sensitivity or obtaining the precise reading, it has been generally known to use a lamination of a metallic thin layer and a nonmetallic thin layer comprising PbO, a metal fluoride or an In-Ge-S calcogen compound as a recording layer of the recording medium as described in Japanese Patent Publication No. 59(1984)-34519. For the same purpose, Japanese Patent Publication No. 58(1983)-33120 proposes a recording layer composed of a mixture of metal and GeS, and Japanese Patent Publication No. 58(1983)-15319 proposes a recording layer comprising a metal and a mixture of a metal fluoride such as $MgF_2$ or a metal oxide such as $MoO_2$.

However, it is sometimes difficult to well form pits on such recording layer by irradiation with laser beam in a procedure for recording information. The reason is thought that while an area of the recording layer exposed to the laser beam melts by sufficient output of the laser beam, the melted recording material hardly moves to form a pit, and after the exposure is complete, the melted recording material again solidifies in the original area. Accordingly, the output level of the laser beam is necessarily increased to reliably form pits on the recording layer. Thus, the sensitivity of the recording medium having such recording layer is unsatisfactory. Further, such insufficient or incomplete pits cause errors in the procedure for reading information, resulting a serious problem.

## SUMMARY OF THE INVENTION

It is an object of the present invention to provide an information recording medium which is improved in the sensitivity for the recording procedure.

It is another object of the invention to provide a recording medium showing less error-occurrence (namely, less bit error rate) in the read-out procedure.

It is a further object of the invention to provide a recording medium which shows high sensitivity in the recording procedure and less error-occurrence in the read-out procedure even after the medium is stored in a severe atmosphere such as a high temperature, high humidity, etc. for a long period of time.

The present invention resides in the improvement of a recording medium comprising a substrate and a recording layer for writing and/or reading information which is provided on said substrate, in which the recording layer contains a metal oxide in the form of discontinuous spots on the side facing the substrate.

As a result of study on the recording media, the present inventors have found that the sensitivity of an information recording medium can be highly enhanced and the bit error rate (B.E.R.) in the read-out procedure can be prominently reduced by providing on the substrate a recording layer containing a metal oxide in the form of discontinuous spots, namely, spots which are arranged independently of each other, on the side facing the substrate.

In more detail, the information recording medium of the invention contains a metal oxide on the substrate-side of the recording layer in the form of discontinuous spots, so that interfacial force between the substrate and the recording layer is varied and hence a high C/N ratio (ratio of output of carrier to output of noise) is obtained without increasing the output level of employed laser beam, whereby the sensitivity of the recording layer is enhanced, and favorably shaped pits are readily formed on the recording layer. Further, the bit error rate (B.E.R.) is prominently reduced in the procedure of reading information.

In the invention, since the metal oxide spots discontinuously exist on the substrate-side of the recording layer, there is remarkably avoided a loss of heat which is caused by diffusion on the surface plane of heat energy given under irradiation with laser beam, as compared with a conventional case in which the metal oxide layer continuously exists in the recording layer in the super-posed form in parallel with the surface of the recording layer or other conventional case in which the metal oxide exists in the recording layer in combination with other recording materials.

Furthermore, the recording medium of the invention can keep high sensitivity and show less bit error rate in the read-out procedure even after the medium is stored under severe environmental conditions such as a high temperature or high humidity for a long period. That is, the recording medium of the invention is very excellent in the physical endurance.

Especially in the case of providing a chlorinated polyolefin layer between the substrate and the recording layer, a high C/N ratio can be obtained owing to the synergistic effect of high surface tension of the metal oxide and heat-insulating characteristics of the chlorinated polyolefin layer even when the output level of the laser beam is low.

In addition to the above-described favorable features, the discontinuity with respect to size of spots or interval between adjoining spots of the metal oxide can be optionally determined in the preparation of the present recording medium, and thereby any structure suitable for the aimed recording medium can be easily obtained. It is also possible in the present invention to adjust the reflectance of laser beam in the read-out procedure.

## BRIEF DESCRIPTION OF THE DRAWINGS

Fig. 1 is a partial section illustrating a structure of a recording medium according to the present invention.

Fig. 2 is a plan view illustrating distribution of metal oxide spots contained in a recording layer of the recoding medium of Fig. 1.

## DETAILED DESCRIPTION OF THE INVENTION

The recording medium of the present invention can be prepared, for example, in the following manner.

The substrate material employed in the invention can be selected from any materials which have been employed as the substrates of the conventional recording media. From the viewpoint of optical characteristics, smoothness, workability, handling properties, long-term stability and manufacturing cost, preferable examples of the substrate material include glass such as tempered glass, acrylic resins such as cell-cast polymethyl methacrylate and injection-molded polymethyl methacrylate; vinyl chloride resins such as polyvinyl chloride and vinyl chloride copolymer; polycarbonate resins; and epoxy resins. Among these materials, polymethyl methacrylate, polycarbonate, epoxy resin and glass are preferred from the viewpoint of dimensional stability, transparency and smoothness.

The substrate can be provided with pre-groove for the purpose of forming a tracking groove or protruded and depressed portions for giving information such as address signals.

The surface of the substrate on which a recording layer is placed may be provided with a subbing layer for the purpose of improving smoothness, adhesion to the recording layer and sensitivity, and preventing the recording layer from being denatured. Examples of material employable for the preparation of the subbing layer include polymer materials such as polymethyl methacrylate, acrylic acid-methacrylic acid copolymer, nitrocellulose, chlorinated polyolefin, polyethylene, polypropylene and polycarbonate; organic materials such as silane coupling agent; inorganic oxides such as $SiO_2$ and $Al_2O_3$; and inorganic fluorides such as $MgF_2$.

When the substrate material is glass, other additional layer made of a polymer having a hydrophilic group and/or a maleic anhydride group such as a styrene/maleic anhydride copolymer is preferably provided between the above-mentioned subbing layer and the substrate for preventing an adverse effect to the recording layer given by an alkali metal ion and an alkaline earth metal ion having been liberated from the substrate.

The subbing layer can be formed on the substrate by dissolving or dispersing the above-mentioned material in an appropriate solvent to prepare a coating solution (i.e., dispersion) and then applying the coating solution onto the surface of the substrate by a conventional coating process such as spin coating, dip coating or extrusion coating.

Especially when the material of the subbing layer is chlorinated polyolefin, heat energy given under irradiation with laser beam is prevented from escape from the recording layer to the substrate through heat conduction, and the irradiated part of the chlorinated polyolefin layer generates a chlorine gas to readily form pits on the recording layer. Hence, the bit error rate can be further reduced and the recording sensitivity of the resulting medium can be highly enhanced.

The chlorinated polyolefin employable as the material of the subbing layer generally has a chlorination ratio of not less than 30 %, preferably not less than 50 %, more preferably in the range of 50 to 70 %. Particularly preferred chlorinated polyolefins are chlorinated polyethylene and chlorinated polypropylene from the viewpoint of heat stability and solubility.

The chlorinated polyolefin layer can be formed on the substrate by preparing a coating solution containing the above-mentioned chlorinated polyolefin in a solvent and applying the coating solution onto the surface of the substrate.

Examples of the solvent for dissolving the chlorinated polyolefin include toluene, xylene, ethyl acetate, butyl acetate, Cellosolve acetate, methyl ethyl ketone, 1,2-dichloroethane, methyl isobutyl ketone, cyclohexanone, cyclohexane, tetrahydrofuran, ethyl ether and dioxane.

The coating solution for the chlorinated polyolefin layer may contain other additives such as a plasticizer and a lubricant according to the purpose.

The coating solution can be coated over the surface of the substrate by a conventional process such as spray coating, spin coating, dip coating, roll coating, blade coating, doctor roll coating and screen printing.

The coating solution for the chlorinated polyolefin layer is applied onto the surface of the substrate (or the subbing layer) to give a coated layer, and the coated layer is dried to form a chlorinated polyolefin layer on the substrate (or the subbing layer). The thickness of the chlorinated polyolefin layer is generally in the range of 50 to 1,000 angstroms, preferably in the range of 100 to 500 angstroms.

On the substrate (or the subbing layer) is then provided a recording layer which is the characteristic requisite of the present invention.

As the material of the recording layer, there can be first mentioned a metal oxide.

Examples of the metal oxides employable in the invention include $PbO$, $WO_2$, $WO_3$, $TiO$, $SiO$, $SiO_2$, $In_2O$, $In_2O_3$, $Al_2O_3$, $MoO_2$, $GeO$, $GeO_2$, $CdO$, $Ga_2O$, $Na_2O$, $ReO_2$, $ReO_3$, $Re_2O_7$ and $ZnO$.

The metal oxide is generally contained in the recording layer in an amount of 0.1 to 30 %, preferably 1 to 15 %, by weight of the recording layer.

The metal oxide can be contained in the recording layer in combination with other materials. Examples of the materials employable in combination with the metal oxide include low-melting metals such as In, Te, Sn, Pb and Bi; metal sulfides such as CrS, Cr$_2$S, Cr$_2$S$_3$, MoS$_2$, MnS, FeS, FeS$_2$, CoS, Co$_2$S$_3$, NiS, Ni$_2$S, PbS, Cu$_2$S, Ag$_2$S, ZnS, In$_2$S$_3$, In$_2$S$_2$, GeS$_x$ (0.5 < x ≤ 2.0), SnS, SnS$_2$, As$_2$S$_3$, Sb$_2$S$_3$ and Bi$_2$S$_3$; and metal oxides such as GeO, GeO$_2$, SiO, SiO$_2$ and In$_2$O$_3$. Preferred is a mixture of the low-melting metal and the metal sulfide and/or the metal oxide.

Particularly preferred is a combination of In$_2$O$_3$ (metal oxide) and a mixture of In and GeS (other material).

The low-melting metal is generally contained in the recording layer in an amount ranging from 30 to 80 %, preferably from 50 to 80 %, by weight of the recording layer. The metal sulfide and/or the metal oxide is generally contained in the recording layer in an amount ranging from 10 to 50 %, preferably from 20 to 40 %, by weight of the recording layer.

In the invention, the above-mentioned metal oxide is required to be contained in the recording layer in the form of discontinuous spots, that is, independently located spots, on the side facing the substrate.

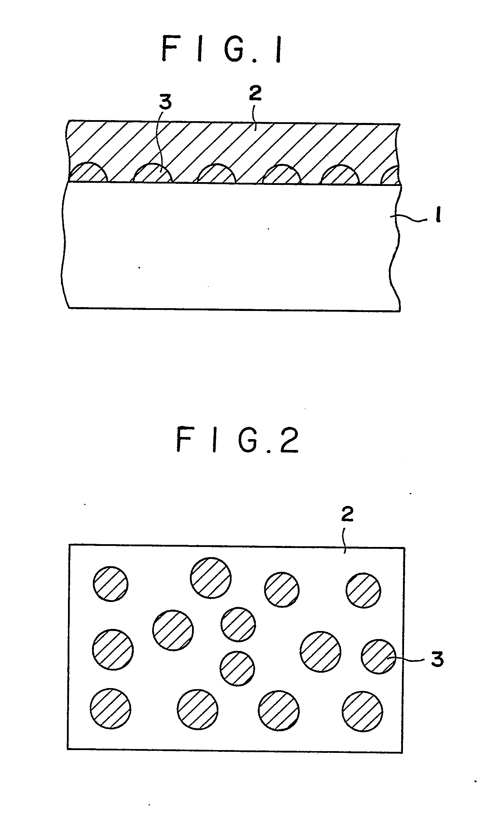

For example, as shown in Figs. 1 and 2, the metal oxide discontinuously exists on the specific part of a recording layer 2, said part facing a substrate 1, in the form of spots 3.

Fig. 1 is a partial section showing a structure of the recording medium according to the present invention comprising a substrate and a recording layer, superposed in this order. Fig. 2 is a plan view showing distribution of spots of a metal oxide 3 on a section plan in the case that the recording layer is cut on the nearest part to the substrate in parallel with the surface of the recording layer.

The metal oxide contained in the recording layer in the form of spots preferably has a mean diameter of the spots in the range of 10 to 500 angstroms and a mean interval between adjoining spots in the range of 50 to 1,000 angstroms.

The mean height of the spots of the metal oxide is generally in the range of 5 to 200 angstroms, preferably in the range of 5 to 50 angstroms.

The recording layer can be formed on the substrate through vapor deposition, sputtering or ion plating process. The formation of spots of the above-mentioned metal oxide is done by the vapor deposition or sputtering, but other processes can be also employed. For example, a metal having been vapor-deposited on the recording layer in the form of spots is allowed to stand in an air or subjected to glow treatment so as to oxidize the deposited metal. The size of the spots of the metal oxide and the interval between the spots can be controlled, for instance, by varying a temperature of the substrate, degree of vacuum and deposition rate.

The recording layer may be composed of a single layer or plural layers. The thickness of the recording layer is generally in the range of 200 to 1,000 angstroms from the viewpoint of optical density required for the optical recording.

By incorporating the metal oxide into the side of the recording layer facing the substrate in the form of discontinuous spots, loss of heat caused by diffusion along the surface plane of heat energy which is given by irradiation with laser beam can be greatly reduced, as compared with the case in which the metal oxide continuously exists in the recording layer in the superposed form in parallel with the surface of the recording layer or the case in which the metal oxide exists in the recording layer in combination with other recording materials. As a result, pits can be easily formed on the recording layer in the procedure for recording information with laser beam.

Accordingly, the output level of the laser beam can be lowered and the recording sensitivity of the resulting medium can be enhanced. Further, since favorably shaped pits are obtained, the bit error rate is prominently reduced in the read-out procedure.

A thin film of an organic material such as silicon dioxide, tin oxide and manganese fluoride or a polymer material such as a thermoplastic resin and a photo-setting resin may be formed on the free surface of the substrate (the surface not facing the recording layer) by means of vacuum metallizing, sputtering process or coating process in order to increase resistance to damage and moisture proofness,

Thus, a recording medium of the present invention consisting of a substrate and a recording layer superposed in this order can be prepared.

A recording medium of two substrates adhered-type can be prepared by combining two substrates having the above-described structure using an adhesive, etc. A recording medium of air-sandwich structure can be prepared by combining two disc-shaped substrates, at least one of which having the above-described structure, by interposing therebetween a ring-shaped inner spacer and a ring-shaped outer spacer.

5

The present invention is further illustrated by the following examples.

Example 1

On a surface of a polycarbonate substrate in the form of a disc (outer diameter: 130 mm, inner diameter: 15 mm, thickness: 1.2 mm) was vapor-deposited $In_2O_3$ under conditions of a substrate temperature of not higher than 35°C, degree of vacuum of $5 \times 10^{-5}$ torr and deposition time of 20 sec. through an electrical resistance heating method to form spots of $In_2O_3$ having a means diameter of 100 angstroms and a mean interval between adjoining spots of 300 angstroms on the substrate.

On the substrate having the spots of $In_2O_3$ were further vapor-deposited altogether In and GeS in such a manner that the amount of GeS would be 71.1 wt.% to form a recording layer of 250 angstroms thick (see. Fig. 1). The resulting recording layer contains $In_2O_3$, In and GeS in the amounts of 5.2 wt.%, 67.4 wt.% and 27.4 wt.%, respectively.

Thus, a recording medium according to the present invention comprising a substrate and a recording layer was prepared.

Comparison Example 1

The procedures of Example 1 were repeated except for not providing spots of $In_2O_3$ on the substrate, to form a recording layer containing In and GeS (amount of In: 71.1 wt.%) having thickness of 250 angstroms on the substrate.

Thus, a recording medium comprising a substrate and a conventional recording layer was prepared.

Evaluation of Recording Medium

The recording media prepared in Example 1 and Comparison Example 1 were evaluated on the sensitivity and the bit error rate according to the following tests.

(1) Sensitivity

The evaluation was done by recording binary values (1,0,1,0,---) on the medium at a linear rate of 5 m/sec and measuring a laser output (recording power) when C/N ratio (output of carrier/output of noise) reached the maximum level, and the maximum C/N ratio in the following two cases:

Case (a): just after the preparation of the medium;

Case (b): after storage of the medium for 30 days at 60°C and 90 %RH in a constant-temperature and constant-humidity bath.

(2) Error bit rate

The recording medium having been recorded with information was measured on the B.E.R. (bit error rate) indicating a ratio of error signal in the reproduced signals, using a Nakamichi Disc Evaluating Device (OMS-1000) in the above-mentioned Case (a) and Case (b). The measurement of the B.E.R. was done with respect to the recording media recorded at a recording power of 6 mW using a spectral analyzer under the conditions of a band width of 10 KHz.

The results are set forth in Table 1.

Table 1

| | | Recording Power (mW) | C/N Ratio (dB) | B.E.R. | |
| | | | | Case (a) | Case (b) |
|---|---|---|---|---|---|
| Example | 1 | 6 | 51 | $5 \times 10^{-5}$ | $5 \times 10^{-5}$ |
| Com. Example 1 | | 7 | 45 | $7 \times 10^{-3}$ | $5 \times 10^{-2}$ |

As is evident from the results shown in Table 1, the recording medium according to the invention (Example 1) gave a high C/N ratio at a low recording power and showed high recording sensitivity. Further, the value of B.E.R. was extremely low and the medium showed less error-occurrence in the read-out procedure. The recording medium of the invention also gave no variation on the B.E.R. value even after storage for 30 days at 60°C and 90 %RH, resulting high physical endurance.

On the contrary, the recording medium for comparison (Comparison Example 1) required a high recording power and showed poor recording sensitivity. Further, the value of B.E.R. was high just after the preparation of the medium and the value increased with time, resulting deterioration in the endurance.

Example 2

On the same substrate as used in Example 1 was coated a coating solution having the following composition by spin coating.

Composition of Coating Dispersion (by weight)

Chlorinated polyethylene $-(C_2H_{4-y}Cl_y)_n$      0.2 part
Methyl ethyl ketone 10 parts
Cyclohexane 100 parts

The coated layer was dried to form a chlorinated polyethylene layer having thickness of 200 angstroms (in dry basis) on the substrate.

Then, on the chlorinated polyethylene layer was vapor-deposited $In_2O_3$ in the form of spots in the same manner as described in Example 1.

On the substrate having spots of $In_2O_3$ were further vapor-deposited together In and GeS in the same manner as described in Example 1 to form a recording layer comprising $In_2O_3$, In and GeS and having thickness of 250 angstroms.

Thus, a recording medium comprising a substrate and a recording layer superposed in this order was prepared.

Comparison Example 2

The procedures of Example 2 were repeated except for not forming spots of $In_2O_3$ on the chlorinated polyethylene layer, to form a recording layer comprising In and GeS (amount of In: 52.5 wt.%) and having thickness of 250 angstroms on the substrate.

Thus, a recording medium comprising a substrate, a chlorinated polyethylene layer and a recording layer superposed in this order was prepared.

The recording media prepared in Example 2 and Comparison Example 2 were evaluated on the sensitivity and bit error rate according to the aforementioned tests. The bit error rate was measured with respect to the recording media recorded at a recording power of 6 mW.

The results are set forth in Table 2, in which the results on the recording medium prepared in Comparison Example 1 are also set forth.

### Table 2

|  | | Recording Power (mW) | C/N Ratio (dB) | B.E.R. Case (a) | B.E.R. Case (b) |
|---|---|---|---|---|---|
| Example | 2 | 5 | 52 | $3 \times 10^{-5}$ | $3 \times 10^{-5}$ |
| Com. Example 1 | | 7 | 45 | $7 \times 10^{-3}$ | $5 \times 10^{-2}$ |
| Com. Example 2 | | 6 | 49 | $7 \times 10^{-5}$ | $5 \times 10^{-4}$ |

As is evident from the results shown in Table 2, the recording medium according to the invention (Example 2) having a recording layer comprising $In_2O_3$, In and GeS gave a high C/N ratio at an extremely low recording power and showed high recording sensitivity. Further, the value of B.E.R. was very low and the medium showed less error-occurrence in the read-out procedure. The record ing medium of the invention also gave no variation on the B.E.R. value even after storage for 30 days at 60°C and 90 %RH, resulting high physical endurance.

On the contrary, the recording media for comparison (Comparison Examples 1 and 2) required a high recording power and showed high values of B.E.R. Hence, the recording media for comparison were inferior to the recording medium of the invention in the recording sensitivity and the error-occurrence in the read-out procedure.

## Claims

1. In a recording medium comprising a substrate and a recording layer for writing and/or reading information with laser beam which is provided on the substrate, the improvement in which said recording layer contains a metal oxide in the form of discontinuous spots on the side facing the substrate.

2. The recording medium as claimed in claim 1, wherein said spots of a metal oxide has a mean diameter in the range of from 10 to 500 angstroms and a mean interval between adjoining spots is in the range of from 50 to 1,000 angstroms.

3. The recording medium as claimed in claim 1, wherein said metal oxide is selected from the group consisting of PbO, $WO_2$, $WO_3$, TiO, SiO, $SiO_2$, $In_2O$, $In_2O_3$, $Al_2O_3$, $MoO_2$, GeO, $GeO_2$, CdO, $Ga_2O$, $Na_2O$, $ReO_2$, $ReO_3$, $Re_2O_7$ and ZnO.

4. The recording medium as claimed in claim 1, wherein said metal oxide is contained in the recording layer in an amount ranging from 0.1 to 30 % by weight of the recording layer.

5. The recording medium as claimed in claim 1, wherein said recording layer further contains a low-melting metal selected from the group consisting of In, Te, Sn, Pb and Bi, and at least one metal compound selected from the group consisting of a metal sulfide and a metal oxide.

6. The recording medium as claimed in claim 1, wherein said recording layer comprises a mixture of In and GeS.

7. The recording medium as claimed in claim 1, wherein a chlorinated polyolefin layer is provided between the substrate and the recording layer.

# FIG.1

# FIG.2